(19) **Europäisches Patentamt**

**European Patent Office**

**Office européen des brevets**

(11) **EP 1 440 418 B1**

(12) **EUROPEAN PATENT SPECIFICATION**

(45) Date of publication and mention
of the grant of the patent:
**02.02.2005 Bulletin 2005/05**

(51) Int Cl.$^7$: **G06K 19/077**

(86) International application number:
**PCT/CH2001/000644**

(21) Application number: **01975956.2**

(22) Date of filing: **31.10.2001**

(87) International publication number:
**WO 2003/038745 (08.05.2003 Gazette 2003/19)**

(54) **TRANSPONDER IC WITH OPTIMIZED DIMENSIONS**

INTEGRIERTER SCHALTKREIS MIT OPTIMIERTEN ABMESSUNGEN FÜR TRANSPONDER

CIRCUIT INTEGRE DE TRANSPONDEUR A DIMENSIONS OPTIMISEES

(84) Designated Contracting States:
**AT BE CH CY DE DK ES FI FR GB GR IE IT LI LU MC NL PT SE TR**

(43) Date of publication of application:
**28.07.2004 Bulletin 2004/31**

(73) Proprietor: **SOKYMAT S.A.**
**1614 Granges (Veveyse) (CH)**

(72) Inventors:
• **BIELMANN, Marc**
**CH-1635 La Tour-de-Trême (CH)**

• **FURTER, Urs**
**CH-1845 Noville (CH)**
• **MIEHLING, Martin**
**CH-1614 Granges (Veveyse) (CH)**

(74) Representative: **Besse, François**
**ANDRE ROLAND IPS,**
**15, Avenue Tissot,**
**P.O. Box 1255**
**1001 Lausanne (CH)**

(56) References cited:
**DE-C- 4 431 754          US-A- 5 786 626**

**Description**

Field of the invention

The present invention relates to a transponder and more specifically to a RFID (Radio-Frequency Identification) transponder made essentially of an antenna circuit connected to an integrated circuit (IC).

State of the art

RFID transponder circuits are used for the business field of radio-frequency identification. A passive RFID transponder is made by connecting an application specified integrated circuit (ASIC) to an antenna circuit. An external reader supplies energy and optionally information by means of this antenna circuit to the IC. The IC sends information back to the reader, using the same antenna.

RFID transponders are needed and used in high quantity with strong growing demand. This results in high price pressure and the need for cost effective and reliable production processes.

In order to decrease the manufacturing and product costs, while increasing the reliability, during the last years more and more components from the resonant circuit (mainly capacitors) became integrated to the IC. This results in a minimum of 2 components, used to manufacture modem passive RFID transponders. On the one hand the IC with integrated components for the resonant circuit and on the other hand the antenna circuit itself. The way to manufacture these transponders efficiently with a minimum of components is disclosed e.g. in US-A-5'572'410.

Further difficulties are the interconnection process from the antenna circuit to the IC using a minimum of steps and material. Here two major approaches are used, i.e. the thermo compression bonding and the flip-chip connection. The thermo compression bonding is an inter-metallic connection between antenna and the bumps (connecting gold surfaces on the IC, also called pads). This approach is mainly used for 125 KHz transponders to contact isolated wire coils to the IC in using special bond pads (called Megapads or Megabumps). The thermo compression technology, which is used on the present market, needs a surface bigger than typical pad size (90 μm x 90 μm) used for flip-chip technology or wire bonding. The corresponding technology is disclosed in EP-B-756'736.

The flip-chip connection generally consists of one of two approaches - solder bonding (including Pb-Sn, Pb-In, ...) and conductive adhesive bonding. This connection is mainly used for 13,56 MHz and GHz transponders to contact planar antennas (inductive and capacitive) to the IC. The corresponding technology is described in US-A-5'528'222.

The fully functioning but not yet packaged products formed by an IC connected to an antenna are called electronic-unit (e-unit) or transponder inlay.

US-A-5 786 626 discloses a radio frequency transponder comprising an IC and an antenna connected to the IC. The features in the preamble of claim 1 are known from this document.

The last major production step after manufacturing the electronic-unit (e-unit) is the packaging process. Transponder packaging is a requirement in order to use them in different applications.

For transponder packaging, several processes are used. Among the most common are lamination, potting or molding. For example, a lamination process for transponder packaging is disclosed in EP-B-760'986.

With the constant need for higher memory density and logic complexity in the transponder ICs and with the continuous cost reduction on the other side, the ICs size reduction is permanently requested. This size reduction also leads to a technology integration.

If the first transponder IC's were manufactured with 4 μm technology (technology size is defined by the smallest physical structure of the IC) or even more, today's transponders IC's are manufactured with smaller structures than 0,5μm.

Usually an IC passivation layer is placed on the IC. It is manufactured during the wafer manufacturing process in order to isolate and maintain the integrity of the underlying structures of the IC (circuitry). Only the connection pads and, if available, test pads are not covered by the passivation layer. The passivation is carried out by applying an oxide layer (or several layers) on the top of the active circuit (for example : SiNx, SiO2, etc.). The passivation thickness is made as thin as possible in order to save manufacturing time. Typical passivation layer thickness is between 0,5μm and 2,0 μm.

Using these more integrated ICs with several times smaller structures new problems arise, namely the circuits are very sensitive for any cross coupling which can be capacitive, inductive or ohmic. These effects can also be combined. This happens particularly in the packaging process when the antenna circuit is pressed towards the IC active surface. After packaging it results in a drastic reduction of the yield. Furthermore, intermittent functionality can be observed.

If the antenna circuit is directly connected to the contact pads of the IC, the antenna circuit is situated just above the active side of the IC circuitry.

As it will be explained further in the present text such a configuration results in some problems.

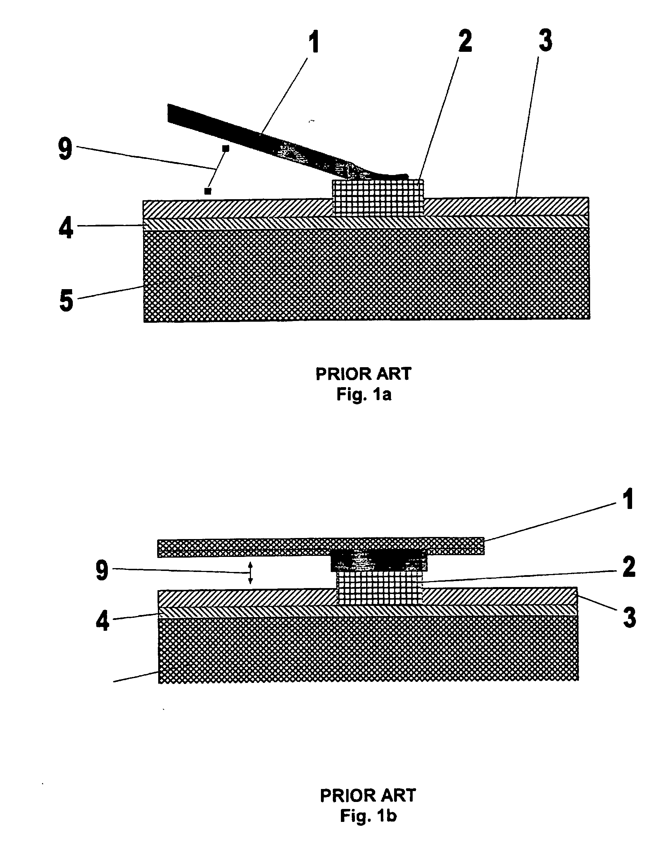

Having the antenna circuit close to the active surface of the IC, a parasitic coupling occurs between the antenna and the active structure of the IC layer (see Fig. 1). This causes a cross coupling 9 with the underlying structures of the IC. The thickness of the passivation layer and its dielectric constant have direct influence on the value of the parasitic coupling and for the inductive coupling, the thickness of the passivation layer has a direct influence.

$$\text{Capacitive coupling} = f(\varepsilon r/d) \qquad \text{Inductive coupling} = f(l/d^2)$$

$\varepsilon_r$ is the relative dielectric material constant
d is the distance between the conductors

Before the packaging process, i.e. when the distance between the antenna circuit and the active structure of the IC layer are relatively important, the value of the cross coupling 9 is so small that it does not influence the functionality of the IC.

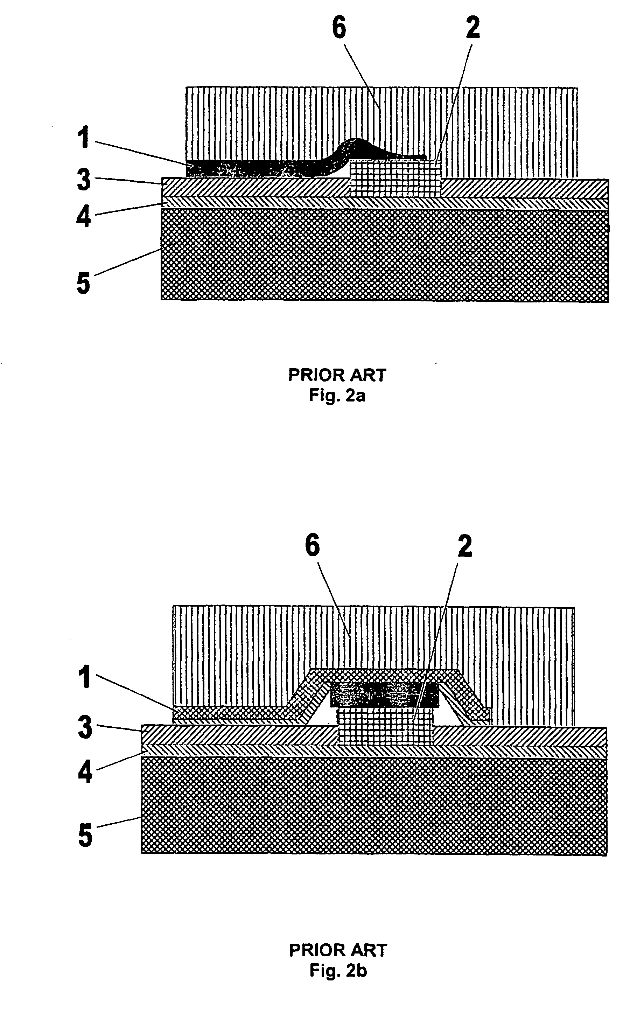

When the antenna circuit is pressed down during the packaging process towards the IC, the distance between antenna and the IC active structure is drastically reduced. This results in an increase of the cross coupling 9. The packaging will keep the antenna circuit in this position, even after the pressure is released as shown on the Fig. 2.

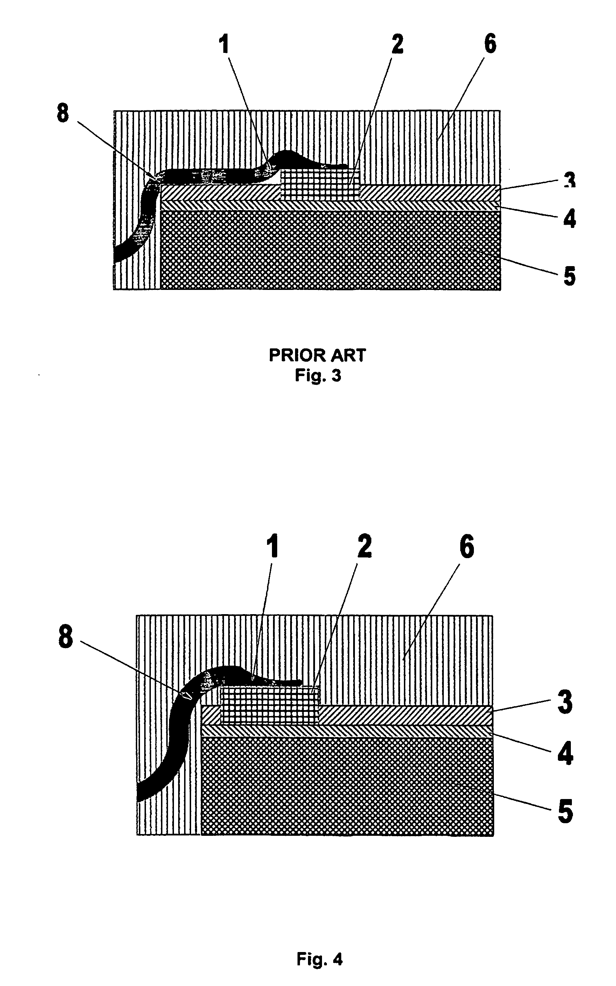

Beside the cross coupling 9 problem described above, prior art transponders show another problem which, in particular, results in a yield decrease : The too close proximity or contact of the wires connecting the bumps to the antenna and the IC edge (see Fig. 3) very often creates :

- an ohmic coupling between antenna circuit and IC at the sawing edge of the IC,
- an ohmic shortcut due to damaged wire insulation at the sharp sawing edge of the IC,
- a broken wire (open circuit) if the pressure becomes too high during the packaging process.

## Summary of the invention

The present invention provides an improved transponder which solves or at least strongly reduces the above cited problems.

It concerns a RFID transponder comprising an IC on which an antenna circuit is connected by means of at least one connection bump, characterized by the fact that the zone of the IC layer which is situated below the antenna circuit includes an active IC structure, and the distance between said connection bump(s) and the closest IC edge is less than 70 μm.

In a preferred embodiment the distances between said connection bump(s) and the closest two IC edges are less than 70 μm.

The IC comprises an insulation layer (oxide layer as for example: SiNx, SiO2, etc.) of typically 0.5 to 2 μm, which is in between the underlying active structures of the IC and the antenna circuit, in between the connection bump (s) and the IC edge.

In another embodiment the insulation layer is made of the typical passivation layer as described above and an insulation layer which may be made of Polymid. Preferred Polymid is benzocyclobutane (BCB). The insulation layer must be in this case at least 4 μm thick, because the major purpose is to increase the distance between the antenna circuit and the active structure of the IC layer.

## Brief description of the drawings

Figures 1a and 1b show the cross coupling present in prior art transponders.
Figures 2a and 2b illustrate prior art transponders with their packaging.
Figure 3 shows one problem resulting with prior art transponders.
Figures 4 shows a transponder according to the invention.

## Detailed description of the invention

Figure 1a shows a prior art transponder manufactured according to a thermo compression connection process. The transponder comprises an antenna circuit 1 connected to an IC 5 ( more precisely to the active structure of the IC 4) by means of a bump 2.
Figure 1b illustrates a similar transponder but manufactured according to a flip chip connection process.

On both figures we can notice that the close proximity of the antenna circuit with the active surface of the IC 4 forms a cross coupling 9.

The situation cross coupling 9 is identical on figures 2a and 2b, which correspond to the transponders of figures 1a and 1b respectively after a laminated packaging process. The packaging material 6 maintains or even increases the relatively high cross coupling 9.

Figure 3 shows in particular the situation at the IC edge 8 where the antenna circuit 1 is very close to the IC edge. Here the antenna circuit 1 is in direct contact with the passivation layer 3 and also potentially with the active surface 4 of the IC and the Si substrate 5 of the IC.

The IC edge 8 represents a dangerous area for ohmic shortcut. The IC edge 8 itself may break the wires forming the antenna circuit 1. Furthermore, a parasitic ohmic coupling can occur between the antenna circuit 1 and the active surface 4 of the IC or the Si-substrate 5 at the sawing edge 8 of the IC.

Figure 4 shows a transponder according to the present invention. The distance between the IC edge 8 and the bump 2 being less than 70 μm, Comparing the transponder of the invention according to figure 4 with the prior art transponder of figure 3 it can be seen that the distance between the IC edge 8 and the antenna circuit 1 has decreased, thereby reducing the problems discussed previously.

It is also important to notice that the optimized dimensions of the transponder are not only sufficient to reduce these problems but also the problem occurring with the parasitic cross coupling 9.

**Claims**

1. RFID transponder comprising an IC (5) on which an antenna circuit (1) is connected by means of at least one connection bump (2), **characterized by** the fact that the zone of the IC which is situated below the antenna circuit includes an active IC structure (4), and the distance between said connection bump(s) and the closest IC edge (8) is less than 70 μm.

2. Transponder according to claim 1 wherein the distances between said connection bump(s) and the closest two IC edges are less than 70 μm.

3. Transponder according to any of the previous claims wherein on the top of the transponder an additional layer (3) is provided made of a passivation layer in direct contact with the IC active layer (4) and an insulation layer of at least 4 μm thick to increase the distance between the antenna circuit and the structure of the IC.

**Patentansprüche**

1. RFID-Transponder bestehend aus einem IC (5) verbunden mit einem Antennenkreis (1) mittels mindestens einer Anschlussfläche (2), **gekennzeichnet durch** die Tatsache, dass die IC Zone, die sich unter dem Antennenkreis befindet, eine aktive IC-Struktur (4) enthält und der Abstand zwischen diese(n) Anschlussfläche(n) und der nächsten IC-Kante (8) weniger als 70 μm beträgt.

2. Transponder entsprechend Anspruch 1, bei dem die Abstände zwischen diese(n) Anschlussfläche(n) und den nächsten zwei IC-Kanten weniger als 70 μm betragen.

3. Transponder gemäss irgend einem der vorhergehenden Ansprüche, bei dem auf dem Transponder eine zusätzliche Schicht (3) aufgetragen wird, bestehend aus einer Passivierungsschicht in direktem Kontakt mit der aktiven IC-Schicht (4) und einer mindestens 4μm dicken Isolierungsschicht, um den Abstand zwischen dem Antennenkreis und der IC-Struktur zu vergrössern.

**Revendications**

1. Transpondeur d'identification par radio fréquence (RFID) comprenant un circuit intégré (5) sur lequel un circuit d'antenne (1) est connecté au moyen d'au moins un contact de connexion (2), **caractérisé par le fait que** la zone du circuit intégré qui est située sous le circuit d'antenne comprenne une structure de circuit intégré active (4), et que la distance entre le(s)dit(s) contact(s) de connexion et le bord de circuit intégré le plus proche (8) soit inférieure à 70 μm.

2. Transpondeur selon la revendication 1 dans lequel les distances entre le(s)dit(s) contact(s) de connexion et les deux bords de circuit intégré les plus proches sont inférieures à 70 µm.

3. Transpondeur selon l'une quelconque des revendications précédentes dans lequel au dessus du transpondeur, une couche additionnelle (3) est disposée faite d'une couche de passivation en contact direct avec la couche active de circuit intégré (4) et une couche d'isolation d'au moins 4 µm d'épaisseur pour augmenter la distance entre le circuit d'antenne et la structure du circuit intégré.

**PRIOR ART**
**Fig. 1a**

**PRIOR ART**
**Fig. 1b**

PRIOR ART
Fig. 2a

PRIOR ART
Fig. 2b

**PRIOR ART**
**Fig. 3**

**Fig. 4**